# FASCICULE DE BREVET EUROPEEN

(11) **EP 2 031 522 B1**
(45) Date de publication et mention de la délivrance du brevet: **30.09.2015**
(21) Numéro de dépôt: 08162138.5
(22) Date de dépôt: 11.08.2008
(51) Int. Cl.: G06F 17/30

(54) **Fourniture de services media permettant la reprise de sessions interrompues**
Bereitstellung von Mediendiensten zur Wiederaufnahme von unterbrochenen Sitzungen
Media service supply allowing interrupted sessions to be resumed

(30) Priorité: 31.08.2007 FR 0706138
(43) Date de publication de la demande: 04.03.2009
(73) Titulaire: ALCATEL LUCENT, 92100 Boulogne-Billancourt (FR)
(72) Inventeur: Fournigault, Lionel, 91190, GIF SUR YVETTE (FR); Saidi, Mohamed Adel, 91220, BRETIGNY SUR ORGE (FR)
(74) Mandataire: Sciaux, Edmond

(56) Documents cités:
- WO-A-00/58967
- WO-A-02/47467
- WO-A-02/080524
- FR-A- 2 891 678

## Description

L'invention a trait à la fourniture à distance de services média à la demande, tels que, par exemple, vidéo à la demande (VoD, de l'anglais *Video on Demand*) ou audio à la demande (AoD, de l'anglais *Audio on Demand*).

De tels services sont fournis, à un terminal abonné, par un serveur d'applications média sur lequel des données média (vidéo, son) sont stockées et à partir duquel ces données sont transmises en flux au terminal, sur requête préalablement transmise par celui-ci. Le service suppose, bien entendu, que le terminal soit équipé d'un lecteur média (tel que Media Player® ou RealPlayer®) configuré pour lire - éventuellement après décryptage et/ou décompression - et restituer les données média sur une interface graphique (écran) et/ou audio (haut-parleurs).

De nombreux opérateurs estiment que les services média à la demande sont appelés à remplacer à moyen terme les services de diffusion classique (radio et surtout télévision) en proposant aux utilisateurs abonnés des fonctionnalités plus souples, mêlant le direct et le différé.

Ainsi, dans un service classique de VoD, il est possible, au cours d'une session média retransmettant une émission initialement diffusée en direct, d'interrompre à tout instant la restitution sur le terminal, pour la reprendre ultérieurement à un moment choisi par l'utilisateur. Ce service, de type lecture/pause, est extrêmement apprécié car il dispense l'utilisateur d'être continuellement présent au cours de la diffusion. Toutefois, la session média elle-même ne doit pas être interrompue, car les données continuent d'être diffusées, en étant simplement mises en cache dans le terminal pour une restitution ultérieure (en différé) au moment choisi par l'utilisateur

Un inconvénient majeur de ce type de service est que l'interruption d'une session média en cours oblige l'utilisateur souhaitant voir et/ou écouter la fin de l'émission à la reprendre depuis le début.

Il existe un autre type de service, appelé podcast, distinct de l'AoD et de la VoD, grâce auquel l'utilisateur peut télécharger des fichiers de données média sur son terminal pour les lire ensuite au moyen d'un lecteur média approprié (qui peut être le même que pour un service de VoD ou de AoD). Si le podcast permet à l'utilisateur d'accéder directement aux plages de son choix (à condition que son lecteur média le permette, ce qui est généralement le cas), en tant que service de fourniture de média en différé total il ne permet pas, par définition, la diffusion de données média en direct. En outre, il présente l'inconvénient que les fichiers podcastés doivent être sauvegardés localement sur le terminal, la lecture des données depuis un autre terminal obligeant l'utilisateur à podcaster de nouveau les fichiers sur le nouveau terminal.

Le document WO 02/080524 décrit une méthode permettant de découper un objet média en séquences et de marquer ces séquences afin qu'un utilisateur puisse accéder directement à la séquence qui l'intéresse, sans avoir à dérouler l'objet depuis le début jusqu'à la séquence en question.

Le document WO 02/47467 décrit une méthode permettant de dimensionner la surface dédiée à un objet média incrustée dans une page web afin d'y rajouter de la publicité (pouvant être en rapport avec le média utilisé).

L'invention vise à améliorer les services de fourniture de services média à la demande.

A cet effet, un objet de l'invention est un procédé de fourniture à distance d'un service média à la demande depuis un serveur d'applications média à un terminal muni d'un lecteur média et relié au serveur d'applications par l'intermédiaire d'un réseau de télécommunications, ce procédé comprenant les opérations comme définies dans le sujet de la revendication 1.

D'autres objets et avantages de l'invention apparaîtront à la lumière de la description faite ci-après en référence aux dessins annexés dans lesquels :
- la figure **1** est un schéma illustrant l'architecture d'un système de communication permettant la mise en oeuvre d'un procédé de fournitures de services média à la demande selon l'invention ;
- la figure 2 est un diagramme illustrant l'échange de données entre différents composants du système de communication de la figure 1 ;

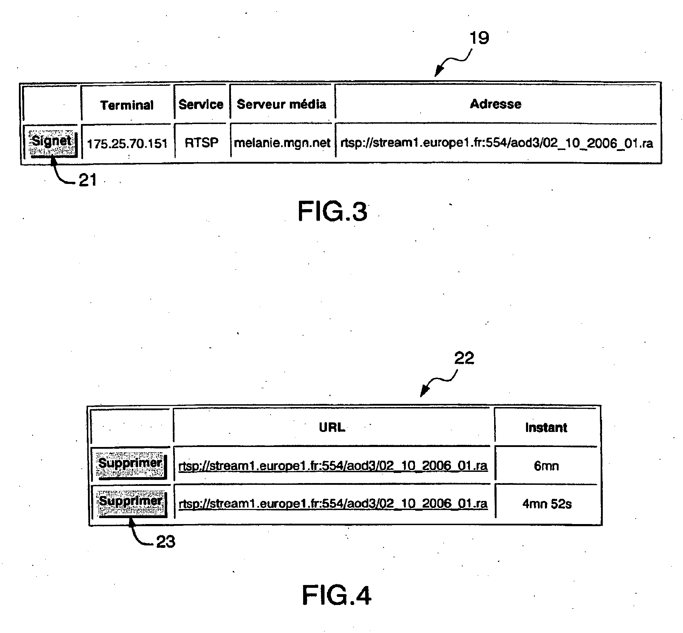

- la figure 3 représente un générateur de signets, tel qu'affiché sur un terminal accédant à des services média à la demande ;
- la figure **4** représente un panneau d'affichage de signets mémorisés lors d'une session média.

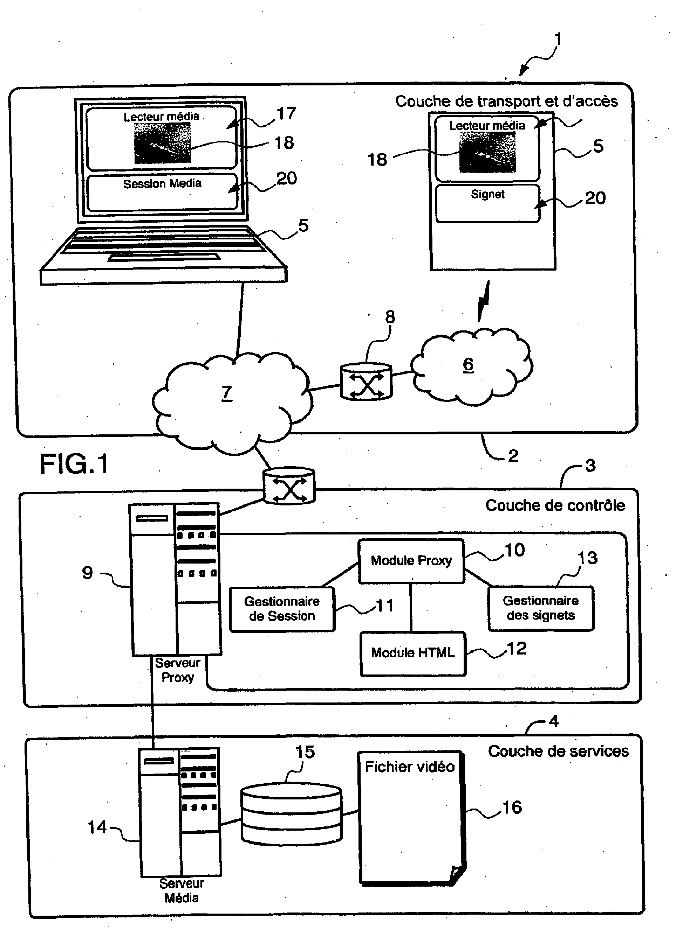

Un système **1** de communication est illustré sur la figure 1. Ce système **1** est, de manière classique, organisé en trois couches : une couche **2** de transport et d'accès, une couche **3** de contrôle et une couche **4** de services.

Au niveau de la couche **2** de transport et d'accès, le système **1** de communication comprend au moins un terminal **5** muni d'un écran et intégrant un lecteur média tel que MediaPlayer ou RealPlayer. On suppose que l'utilisateur du terminal **5** est abonné à un service de fourniture en ligne de média à la demande (VoD ou AoD). Le terminal **1** peut être fixe, tel qu'un ordinateur personnel, ou mobile, tel qu'un Assistant numérique personnel (PDA, Personal Digital Assistant) communicant ou encore un Smartphone. Dans ce dernier cas, le terminal **2** est relié à un réseau 6 de mobiles permettant de transmettre des données média par l'interface air, par exemple un réseau de troisième génération (3G), un réseau WiFi, WiMax, etc.

Il est à noter qu'un même utilisateur peut disposer, pour un même abonnement, de plusieurs terminaux **5,** par exemple un terminal fixe et un terminal mobile.

Le ou chaque terminal **5** est relié à un réseau **7** de télécommunications de type IP (Internet Protocol), par exemple l'Internet. Dans le cas d'un terminal **5** mobile, cette liaison est assurée par l'intermédiaire du réseau **6** de mobiles 3G et d'une passerelle 8 ou MGW (Media GateWay), comme cela est illustré sur la figure 1.

Au niveau de la couche **3** de contrôle, le système de communication comprend un serveur **9** mandataire ou proxy, qui peut être intégré à une infrastructure IMS (*IP Multimedia Subsystem*) et est relié aux terminaux **5** par l'intermédiaire du réseau **7** (éventuellement via une passerelle).

Le proxy **9 intègre** quatre modules fonctionnels :
- un module proxy **10,** configuré pour détecter et, sous certaines conditions décrites ci-après, intercepter des requêtes d'établissement de session en provenance du terminal **5** ;
- un gestionnaire **11** de session ;
- un module **12** HTML (*Hyper Text Markup Language*), et
- un module **13** de gestion de signets, dont la fonction apparaîtra ci-après:

Le système **1** de communication comprend en en outre, au niveau de la couche **4** de services, au moins un serveur **14** d'applications média relié au proxy **9** (par exemple via l'Internet).

Le serveur **14** d'applications média intègre (ou est relié à) une base de données **15** sur laquelle est mémorisé au moins un fichier **16** de données média, vidéo et/ou audio, appelé fichier source. En pratique, sur la base de données **15** sont mémorisés plusieurs fichiers sources. Il est à noter que des données média (vidéo et audio) peuvent être séparées sur plusieurs serveurs, un premier serveur d'application étant par exemple dédié à la vidéo tandis qu'un autre est dédié à l'audio.

Le ou chaque fichier source **16** est identifié par une adresse, communément appelée URL (de l'anglais *Uniform Resource Locator*), composée d'une chaîne de caractères à syntaxe normalisée, dont voici un exemple donné à titre purement illustratif :
*rtsp:*//*stream1.europe1.fr:554*/*aod3*/*02_10_2006_01.ra*
où *rtsp:*// indique le protocole de communication utilisé, en l'occurrence le protocole RTSP (*Real Time Streaming Protocol* ou protocole de diffusion en continu) défini par l'IETF dans le standard RFC2326 d'avril 1998 ; *stream1.europe1.fr:554* identifie le serveur **14** d'applications média ; et /*aod3*/*02_10_2006_01.ra* identifie le fichier **16** de données media mémorisé sur la base de données. Dans cet exemple, l'extension *ra* indique qu'il s'agit un fichier média lisible sur RealPlayer.

Initialement, une première session média est établie entre le serveur **14** d'applications et le terminal **5**, sur requête de celui-ci.

Toute requête d'établissement émise par le terminal **5 à** destination du serveur **14** d'applications transite par le proxy **9,** configuré pour détecter les requêtes, et dont le gestionnaire **11** de sessions mémorise les sessions média (en dressant la liste des URLs correspondantes) se déroulant entre le terminal **5** et le serveur **14** d'applications.

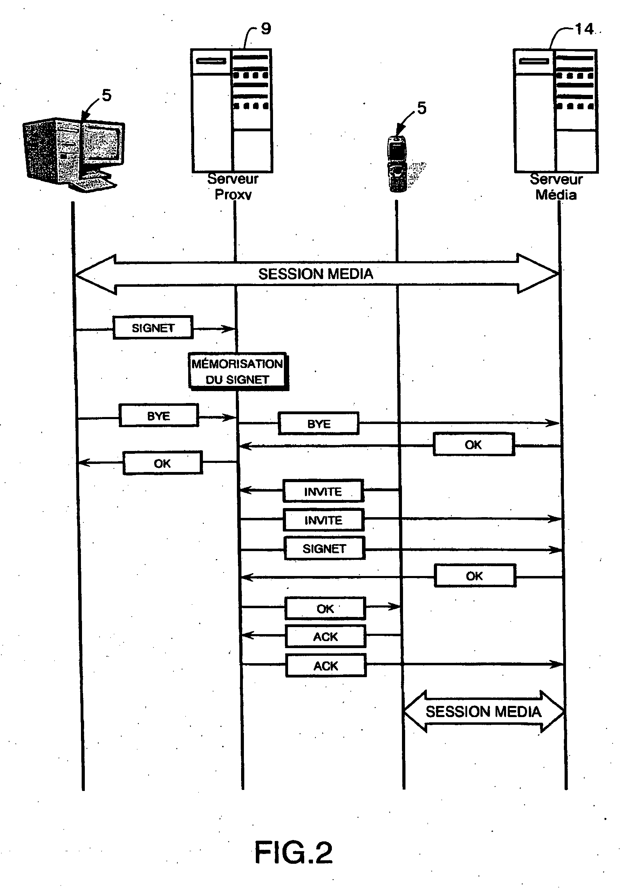

Une fois la session établie, le serveur **14** d'applications envoie au terminal un flux de données média qui sont restituées par le lecteur média du terminal **5,** éventuellement après avoir été décryptées et/ou décompressées. Le lecteur média affiche sur l'écran du terminal **5** un panneau de contrôle au sein d'une première fenêtre **17**. Dans le cas de données vidéo, ce panneau de contrôle peut, comme cela est illustré sur la figure 2, inclure un écran virtuel **18** en incrustation, au sein duquel s'affiche la vidéo.

Le module **13** de gestion de signets commande par ailleurs le lancement, au sein du terminal, lors de l'établissement de la session, d'une application **19** de génération de signets correspondant au flux de données média en cours de transmission. Ce générateur de signets comprend une interface utilisateur ou GUI (*Graphical User Interface)* qui, comme dans l'exemple illustré sur la figure 2, peut se présenter sous la forme d'un tableau inclus dans une fenêtre secondaire **20** ouverte dans l'écran du terminal **5.** Selon un mode particulier de réalisation, le générateur de signets peut être inclus dans une page web de type HTML générée par le module HTML **12** du proxy **9** et affichée sur l'écran du terminal **5** par un navigateur web tel que Internet Explorer® ou Mozilla Firefox®. Ce tableau comprend plusieurs informations incluant l'adresse IP du terminal, le type de protocole employé, un identifiant associé au serveur d'applications et l'adresse ou URL du fichier source, telle que mémorisée par le gestionnaire **11** de session.

Un bouton cliquable **21** est en outre incrusté dans le générateur de signets, pour permettre à l'utilisateur d'indexer la session, c'est-à-dire de créer un (ou plusieurs) signet(s) associé aux données média reçues et comprenant au moins deux pointeurs, à savoir :
- un premier pointeur indiquant la provenance des données média, c'est-à-dire l'URL du fichier source, et
- un second pointeur indiquant un instant prédéterminé au sein de la session média.

Selon un mode de réalisation, cet instant prédéterminé correspond à un temps écoulé au sein de la session média, et plus précisément au temps écoulé entre le début de la session et la création du signet. Ce temps est par exemple mesuré par une horloge intégrée au proxy **9**, ou bien reçue du serveur **14** d'applications en réponse à une requête d'obtention de paramètres (GET_PARAMETER suivant le protocole RTSP).

À la création du signet, le navigateur web adresse au proxy une requête de type CGI (Common Gateway Interface) contenant le signet, lequel est alors mémorisé et associé par le module **13** de gestion des signets à la session correspondante au sein de la liste mémorisée par le gestionnaire **11** de session, afin de permettre une reprise ultérieure de la session à compter de l'instant précité, soit à partir du terminal **5** sur lequel le signet a été créé (par exemple un terminal fixe), soit à partir d'un autre terminal **5** (par exemple un terminal mobile).

Une fois le signet créé par l'utilisateur (et mémorisé par le module **13** de gestion des signets), la session média peut être interrompue sur le terminal **5**, par exemple sur commande de la fermeture du lecteur média.

L'utilisateur peut accéder à la liste des sessions ainsi indexées (c'est-à-dire pour lesquelles des signets ont été créés) au moyen d'un panneau **22** d'affichage des signets mémorisés, qui se présente par exemple sous la forme d'un tableau incrusté dans la page web précitée (par exemple au-dessous du tableau **19** dressant la liste des sessions réalisées) et comprenant pour chaque signet, l'URL du fichier source (l'affichage comprenant un hyperlien vers cet URL) et l'instant mémorisé.

La liste des sessions indexées peut être rafraîchie automatiquement dans le navigateur web, sur commande du gestionnaire **13** des signets, au fur et à mesure de l'indexation des sessions par l'utilisateur. Le panneau **22** peut par ailleurs comprendre une fonctionnalité de suppression des signets, le tableau incluant par exemple, pour chaque signet, un bouton **23** cliquable sur activation duquel le signet est supprimé de la liste.

L'URL de chaque session indexée inclut le pointeur temporel mémorisé sous forme d'une marque ou tag, détectable par le proxy **9.**

Lorsque l'utilisateur souhaite reprendre la session, par exemple depuis un autre terminal **5**, il ouvre le navigateur web et, à partir de la liste des sessions indexées, lance une requête d'établissement de la session de son choix en cliquant sur l'URL correspondante. Le navigateur lance le lecteur média, qui à son tour requiert l'établissement d'une session média. Cette requête transite par le serveur proxy **9**, qui détecte dans l'URL demandée la présence du tag. Le proxy **9** intercepte alors la requête et génère une nouvelle requête à destination du serveur **14** d'applications, comprenant un champ d'instant initial (*starttime*) dont la valeur correspond au pointeur temporel.

Le serveur **14** d'applications renvoie alors le flux média depuis l'URL requise, en débutant à l'instant requis, tel que mémorisé lors de la création du signet.

Comme nous l'avons vu, ce procédé est avantageux, par rapport aux procédés connus de fourniture de services média, en ce qu'il permet à un utilisateur de reprendre une session à compter d'un instant donné de son choix. En outre, il n'est pas nécessaire, dans la mesure où les signets ne sont pas mémorisés localement mais au sein du serveur proxy **9** (et plus précisément par le module **13** de gestion des signets), de reprendre la session à partir d'un autre terminal **5**.

## Revendications

1. Procédé de fourniture à distance d'un service média à la demande depuis un serveur **(14)** d'applications média à un terminal **(5)** muni d'un lecteur média et relié au serveur **(14)** d'applications par l'intermédiaire d'un réseau **(7)** de télécommunications, ce procédé comprenant les opérations consistant à :
- établir une session média entre le serveur **(14)** d'applications et le terminal **(5),** cette session comprenant la fourniture au terminal **(5),** par le serveur **(14)** d'applications, d'un flux de données média ;
- restituer sur le terminal **(5)**, au moyen du lecteur média, les données média reçues au sein du flux,
- créer un signet, associé aux données média et comprenant au moins deux pointeurs, à savoir :
- un premier pointeur indiquant la provenance des données média,
- un second pointeur indiquant un instant prédéterminé au sein de la session média,
**caractérisé en ce qu'**il comprend en outre les opérations consistant à :
- mémoriser ledit signet au sein d'un serveur (9) mandataire interposé entre le terminal (5) et le serveur (14) d'applications média, ce serveur mandataire (9) étant configuré pour intercepter une requête d'établissement de session émise par le terminal (5) à destination du serveur (14) d'applications média.

2. Procédé selon la revendication 1, dans lequel l'instant prédéterminé correspond à un temps écoulé au sein de la session média.

3. Procédé selon la revendication 2, dans lequel l'instant prédéterminé indiqué par le second pointeur correspond au temps écoulé entre le début de la session et la création du signet.

4. Procédé selon l'une des revendications 1 à 3, qui comprend les opérations consistant à :
- émettre depuis un terminal **(5)** muni d'un lecteur média une requête d'établissement d'une session média à destination du serveur **(14)** d'applications média,
- activer un signet préalablement mémorisé,
- établir une session média entre le serveur **(14)** d'applications média et le terminal **(5),**
- fournir au terminal **(5)** un flux de données médias depuis la provenance indiquée par le premier pointeur du signet activé,
- restituer sur le terminal **(5)** les données médias à compter de l'instant indiqué par le second pointeur du signet activé.

5. Système **(1)** de communication comprenant :
- un serveur **(14)** d'applications média,
- un terminal **(5)** muni d'un lecteur média et relié au serveur **(14)** d'applications par l'intermédiaire d'un réseau **(7)** de télécommunications,
- un serveur **(9)** mandataire interposé entre le serveur **(14)** d'applications média et le terminal **(5),** et configuré pour intercepter des requêtes d'établissement de session émise par le terminal **(5)** à destination du serveur **(14)** d'applications média et mémoriser au moins un signet associé à des données média fournies en flux par le serveur **(14)** d'applications média au terminal **(5)**, ce signet comprenant au moins deux pointeurs, à savoir :
- un premier pointeur indiquant la provenance des données média,
- un second pointeur indiquant un instant prédéterminé au sein de la session média.

## Patentansprüche

1. Verfahren zur Fernbereitstellung eines Mediendienstes auf Anfrage eines Medienanwendungsservers (14) an ein Endgerät (5), welches mit einem Medienabspieler ausgestattet ist und über ein Telekommunikationsnetzwerk (7) mit dem Anwendungsserver (14) verbunden ist, wobei dieses Verfahren die folgenden Schritte umfasst:
- Aufbauen einer Mediensitzung zwischen dem Anwendungsserver (14) und dem Endgerät (5), wobei diese Sitzung die Bereitstellung, durch den Anwendungsserver (14), eines Mediendatenstroms an das Endgerät (5) umfasst;
- Wiedergeben, mittels eines Medienabspielmittels, der innerhalb des Stroms empfangenen Mediendaten auf dem Endgerät (5),
- Erstellen eines den Mediendaten zugeordneten Lesezeichens, welches mindestens zwei Pointer umfasst, und zwar:
- einen ersten Pointer, welcher die Herkunft der Mediendaten anzeigt,
- einen zweiten Pointer, welcher einen vorbestimmten Zeitpunkt innerhalb der Mediensitzung anzeigt,
**dadurch gekennzeichnet, dass** es weiterhin die folgenden Schritte umfasst:
- Speichern des besagten Lesezeichens in dem zwischen dem Endgerät (5) und dem Medienanwendungsserver (14) zwischengeschalteten Proxyserver (9), wobei dieser Proxyserver (9) für das Abfangen einer von dem Endgerät (5) an den Medienanwendungsserver (14) ausgegebenen Sitzungsaufbauanforderung konfiguriert ist.

2. Verfahren nach Anspruch 1, wobei der vorbestimmte Zeitpunkt einer innerhalb der Mediensitzung abgelaufenen entspricht.

3. Verfahren nach Anspruch 2, wobei der von dem zweiten Pointer angezeigte vorbestimmte Zeitpunkt der zwischen dem Beginn der Sitzung und der Erstellung des Lesezeichens abgelaufenen Zeit entspricht.

4. Verfahren nach einem der vorhergehenden Ansprüche 1 bis 3, die folgenden Schritte umfassend:
- Ausgeben, durch das mit einem Medienabspieler ausgestattete Endgerät (5), einer Mediensitzungsaufbauanforderung an den Medienanwendungsserver (14),
- Aktivieren eines zuvor gespeicherten Lesezeichens,
- Aufbauen einer Mediensitzung zwischen dem Medienanwendungsserver (14) und dem Endgerät (5),
- Bereitstellen, ab der durch den ersten Pointer des aktivierten Lesezeichens angezeigten Herkunft, eines Mediendatenflusses an das Endgerät (5),
- Wiedergeben, auf dem Endgerät (5), der Mediendaten ab dem von dem Pointer des aktivierten Lesezeichens angezeigten Zeitpunkt.

5. Kommunikationssystem (1), umfassend:
- Einen Medienanwendungsserver (14),
- ein mit einem Medienabspieler ausgestattetes und über ein Telekommunikationsnetzwerk (7) mit dem Anwendungsserver (14) verbundenes Endgerät (5),
- einen zwischen dem Medienanwendungsserver (14) und dem Endgerät (5) zwischengeschalteten Proxyserver (9), welcher dafür konfiguriert ist, von dem Endgerät (5) an den Medienanwendungsserver (14) ausgegebene Sitzungsaufbauanforderungen abzufangen und mindestens ein dem von dem Medienanwendungsserver (14) an das Endgerät (5) bereitgestellten Mediendatenfluss zugeordnetes Lesezeichen zu speichern, wobei dieses Lesezeichen mindestens zwei Pointer umfasst, und zwar:
- einen ersten Pointer, welcher die Herkunft der Mediendaten anzeigt,
- einen zweiten Pointer, welcher einen vorbestimmten Zeitpunkt innerhalb der Mediensitzung anzeigt.

## Claims

1. A method for remotely providing an on-demand media service from a media application server (14) to a terminal (5) equipped with a media reader and connected to the application server (14) by means of a telecommunications network (7) , which method comprises the operations consisting of:
- establishing a media session between the application server (14) and the terminal (5), that session comprising the application server (14) providing the terminal (5) with a flow of media data;
- playing back on the terminal (5), by means of the media reader, the media data received within the flow,
- creating a bookmark associated with the media data and comprising at least two pointers, namely:
- a first pointer indicating the provenance of the media data,
- a second pointer indicating a predetermined moment within the media session,
**characterized in that** it further comprises the operations consisting of:
- saving said bookmark within a proxy server (9) interposed between the terminal (5) and the media application server (14), that proxy server (9) being configured to intercept a session establishment request sent by the terminal (5) to the media application server (14).

2. A method according to claim 1, wherein the predetermined moment corresponds to a time elapsed within the media session.

3. A method according to claim 2, wherein the predetermined moment indicated by the second pointer corresponds to the time elapsed between the start of the session and the creation of the bookmark.

4. A method according to claim one of claims 1 to 3, which comprises the operations consisting of:
- sending a request to open a media session from a terminal (5) equipped with a media reader to the media application server (14),
- activating a previously saved bookmark,
- establishing a media session between the media application server (14) and the terminal (5),
- providing the terminal (5) with a flow of media data from the provenance indicated by the first pointer of the activated bookmark,
- playing back on the terminal (5) the media data beginning at the moment indicated by the second pointer of the activated bookmark.

5. A communication system (1) comprising:
- a media application server (14),
- a terminal (5) equipped with a media player and connected to the application server (14) by means of a telecommunications network (7),
- a proxy server (9) interposed between the media application server (14) and the terminal (5), and configured to intercept session establishment requests sent by the terminal (5) to the media application server (14) and save at least one bookmark associated with media data provided as a flow by the media application server (14) to the terminal (5), that bookmark comprising at least two pointers, namely:
- a first pointer indicating the provenance of the media data,
- a second pointer indicating a predetermined moment within the media session.
